# EUROPEAN PATENT APPLICATION

(11) **EP 4 826 329 A1**
(43) Date of publication of application: **21.10.2026**
(21) Application number: 26171707.8
(22) Date of filing: 10.04.2026
(51) Int. Cl.: G01B 11/16, G01L 1/24

(54) **APPARATUS AND METHOD FOR THREE-DIMENSIONAL STRESS TENSOR RECONSTRUCTION BASED ON AN SECOND-ORDER TENSOR OPTICAL RESPONSE QUANTITY CORRESPONDING TO OPTICAL ANISOTROPY**

(30) Priority: 14.04.2025 KR 20250048344; 06.03.2026 KR 20260040723
(71) Applicant: Korea Advanced Institute of Science and Technology, Daejeon 34141 (KR); Tomocube, Inc., Daejeon 34127 (KR)
(72) Inventor: PARK, YongKeun, 34141 Daejeon (KR); LEE, Juheon, 34141 Daejeon (KR)
(74) Representative: Keller Schneider Patent- und Markenanwälte AG

(57) **Abstract**

Disclosed is a method and device for reconstructing a stress tensor based on a second-order tensor optical response quantity 3D dielectric tensor measurement corresponding to optical anisotropy. A residual stress tensor reconstruction method may include computing a principal axis orientation and a principal component by performing eigenvalue decomposition at each spatial location for an optical anisotropy tensor field; computing the total strain tensor at each spatial location by applying the principal component to an optical anisotropy-strain relationship according to photoelasticity theory; and separating the total strain tensor into an elastic strain component and an eigenstrain component through an inverse operation based on a governing equation according to linear elasticity theory, and calculating the residual stress tensor from the elastic strain component.

## Description

### CROSS-REFERENCE TO RELATED APPLICATION(S)

This application claims the priority benefit of Korean Patent Application No. 10-2025-0048344, filed on April 14, 2025, and Korean Patent Application No. 10-2026-0040723, filed on March 06, 2026, in the Korean Intellectual Property Office, the disclosure of which is incorporated herein by reference.

### BACKGROUND

### 1. Field of the Invention

The following description relates to optical measurement technology using dielectric tensor tomography and technology for reconstructing a three-dimensional (3D) stress state within a material based on a stress-optical relationship, and more particularly, to a method and system for quantitatively reconstructing a stress tensor within a material in a non-destructive manner by inverse-computing 3D dielectric tensor information acquired through polarization-controlled optical measurement.

### 2. Description of the Related Art

Stress present within a material occurs due to a variety of factors, such as manufacturing processing, heat treatment, mechanical processing, and external force application. In particular, residual stress remaining even after the external force is removed may be the principal cause of crack occurrence, deformation, decreased durability, and reliability issues. Therefore, technology for accurately measuring and analyzing the stress state within a material is recognized as an important technical challenge in various industrial and research fields, including a semiconductor, a display, a precise optical component, a structural material, and a biomaterial.

As the conventional stress measurement method, a destructive method of cutting a sample or removing the surface to observe deformation has been widely used. However, this method has limitations in that the method may not preserve the original shape of the sample, a measurement location is limited, and it is difficult to continuously determine the three-dimensional (3D) internal stress distribution. As a non-destructive method, techniques such as X-ray diffraction (XRD) and neutron diffraction are known, but the techniques are mainly limited to crystalline materials, require expensive, large-scale equipment, and have limitations in high-resolution 3D-measurement for microscopic regions.

Meanwhile, a photoelasticity technique has long been known as stress measurement technology using an optical method. According to photoelasticity theory, even in the case of isotropic materials, when stress or deformation is applied, the refractive index changes depending on the orientation, resulting in a birefringence phenomenon. This birefringence has a constant correlation with stress or strain. Using this, techniques for observing the stress distribution through polarizing microscopy, cross-polarization imaging, and phase delay analysis are proposed.

However, most conventional photoelasticity techniques are based on two-dimensional (2D) information on single plane or projection orientation, and have fundamental limitations in quantitively reconstructing tensor information including 3D spatial distribution or directivity of stress that is distributed within the material. Also, since the measurement results are often mainly qualitative or include limited quantitative information, it is difficult to accurately evaluate a complex multiaxial stress state or a stress state in a deep internal region.

Currently, with the development of holography and polarization decomposition technologies, attempts have been made to three-dimensionally measure the optical anisotropy within a material. However, these technologies are also mainly focused on the birefringence or refractive index distribution itself, and a systematic method for directly connecting measured optical tensor information to a stress tensor with material mechanical meaning and interpreting the same has not been sufficiently proposed. In particular, technology for quantitatively reconstructing residual stress remaining within a material in the form of a 3D tensor even after the external force is removed is not known in the art.

Therefore, there is a persistent need for new technology that may quantitatively evaluate a 3D stress tensor including the magnitude and orientation of stress across the entire internal region of a material in a non-destructive manner.

Reference material includes Korea Patent Registration No. 10-2290279.

### SUMMARY

An example embodiment provides a device and method for reconstructing a stress tensor based on a second-order tensor optical response quantity corresponding to optical anisotropy.

According to at least one example embodiment, there is provided a method of reconstructing a residual stress tensor within a material from an optical anisotropy tensor field distributed in a three-dimensional (3D) space, the method including (a) computing a principal axis orientation and a principal component by performing eigenvalue decomposition at each spatial location for the optical anisotropy tensor field; (b) computing the total strain tensor at each spatial location by applying the principal component to an optical anisotropy-strain relationship according to photoelasticity theory; and (c) separating the total strain tensor into an elastic strain component and an eigenstrain component through an inverse operation based on a governing equation according to linear elasticity theory, and calculating the residual stress tensor from the elastic strain component.

According to an aspect, the optical anisotropy tensor field may include a dielectric tensor acquired through tomography using light with a controlled polarization state.

According to another aspect, the dielectric tensor may be a 3×3 tensor defined in the 3D space.

According to another aspect, the light with the controlled polarization state may include a plurality of polarization conditions including different polarization orientations, polarization rotation angles, or polarization combinations.

According to still another aspect, the optical anisotropy tensor field may be acquired by dielectric tensor tomography technology that reconstructs the dielectric tensor within a sample into a single layer based on a plurality of optical signals acquired from the sample under different polarization conditions and illumination conditions.

According to still another aspect, the optical anisotropy tensor field may be expressed as a symmetric second-order tensor at each spatial location, and defined in the form in which eigenvalue decomposition is possible.

According to still another aspect, the computing of the total strain tensor may include computing the total strain tensor by applying a difference between an eigenvalue of an optical anisotropy tensor defined at each spatial location of the optical anisotropy tensor field and an eigenvalue in a reference state to an optical anisotropy-strain mathematical relationship including a photoelasticity coefficient.

According to still another aspect, the total strain tensor may be expressed as the sum of the elastic strain component and the eigenstrain component.

According to still another aspect, the inverse operation may be performed in a manner of estimating the eigenstrain component to satisfy an equilibrium condition assuming a state in which the external force is removed.

According to still another aspect, the inverse operation may be performed by transforming the governing equation according to the linear elasticity theory to the Fourier domain.

According to still another aspect, the inverse operation may be performed using Green's function defined in the Fourier domain.

According to still another aspect, the residual stress tensor may represent a stress state remaining within the material even after the external force is removed.

According to still another aspect, the optical anisotropy tensor field may include a dielectric tensor at each spatial location.

According to still another aspect, the optical anisotropy tensor field may include a refractive index tensor or an optical index ellipsoid tensor at each spatial location.

According to still another aspect, the optical anisotropy tensor field may be defined based on an electric susceptibility tensor or a birefringence tensor.

According to at least one example embodiment, there is provided a method of reconstructing a residual stress tensor from the total strain tensor field distributed within a material, the method including (a) modeling the total strain tensor using the sum of an elastic strain component and an eigenstrain component; (b) separating the eigenstrain component from the total strain tensor through an inverse operation based on a governing equation according to linear elasticity theory; and (c) calculating the residual stress tensor by applying an elastic modulus tensor to the elastic strain component.

According to at least one example embodiment, there is provided a computer program stored in a non-transitory computer-readable recording medium to execute the method on a computer device in conjunction with the computer device.

According to at least one example embodiment, there is provided a non-transitory computer-readable recording medium storing a computer program to execute the method on a computer device.

According to at least one example embodiment, there is provided a residual stress tensor reconstruction system for reconstructing a residual stress tensor within a material from an optical anisotropy tensor field distributed in a three-dimensional (3D) space, wherein the residual stress tensor reconstruction system includes at least one computer device, and, by at least one the processor included in the at least one computer device, is configured to (a) compute a principal axis orientation and a principal component by performing eigenvalue decomposition at each spatial location for the optical anisotropy tensor field; to (b) compute the total strain tensor at each spatial location by applying the principal component to an optical anisotropy-strain relationship according to photoelasticity theory; and to (c) separate the total strain tensor into an elastic strain component and an eigenstrain component through an inverse operation based on a governing equation according to linear elasticity theory, and calculate the residual stress tensor from the elastic strain component.

According to at least one example embodiment, there is provided a system including a computational device for receiving the total strain tensor field and reconstructing a residual stress tensor, wherein the computational device is configured to separate the total strain tensor into elastic strain and eigenstrain, and to calculate a residual stress tensor from the elastic strain.

Herein, the term "optical anisotropy tensor" refers to the concept of including all physical quantity that expresses the optical anisotropy within a material in the form of a second-order tensor, and may include, for example, a dielectric tensor, a refractive index tensor, an optical index ellipsoid tensor, an electric susceptibility tensor, a birefringence tensor, or an optical response tensor physically equivalent thereto.

Therefore, in the example embodiments, although it is described as the "dielectric tensor," it may be interpreted as the concept of including various tensor representations that express the optical anisotropy of a material.

According to example embodiments, there may be provided a device and method for reconstructing a stress tensor based on a second-order tensor optical response quantity corresponding to optical anisotropy.

Example embodiments may quantitatively reconstruct a 3D residual stress tensor within a material without external force history or displacement field information in a non-destructive manner by combining dielectric tensor measurement, photoelasticity theory, and inverse problem analysis based on linear elasticity theory. In particular, example embodiments may stably evaluate the residual stress even after the external force is removed using the eigenstrain concept, and may secure high stability and versatility even for the complex 3D stress distribution through Fourier domain and Green's function-based operations.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a diagram illustrating an example of the general configuration of a residual stress tensor reconstruction system according to an example embodiment;
FIG. 2 is a block diagram illustrating an example of a logical internal configuration of a computer device according to an example embodiment;
FIG. 3 is a flowchart illustrating an example of a residual stress tensor reconstruction method according to an example embodiment;
FIG. 4 is a block diagram illustrating an example of a computer device according to an example embodiment;
FIG. 5 illustrates an example of an optical configuration of a dielectric tensor tomography (DTT) system according to an example embodiment;
FIG. 6 illustrates a conceptual example of a dielectric tensor measurement and reconstruction process using dielectric tensor tomography (DTT) according to an example embodiment;
FIG. 7 conceptually illustrates a physical corresponding relationship between a dielectric tensor or an index ellipsoid and a strain tensor due to the photoelasticity effect according to an example embodiment;
FIG. 8 illustrates an example of the entire data processing flow of computing a principal refractive index and principal axis orientation from a measured 3D dielectric tensor and applying the same to photoelasticity theory to reconstruct a strain tensor, and the result thereof according to an example embodiment;
FIGS. 9 to 12 illustrate examples of distribution of 3D strain tensors reconstructed from dielectric tensors measured using dielectric tensor tomography (DTT) technology for glass specimens subjected to Vickers indentation according to an example embodiment;
FIG. 13 is a block diagram illustrating an example of flow of a 3D inverse problem framework that separates eigenstrain from 3D total strain tensor field and uses the same to reconstruct a residual stress tensor according to an example embodiment;
FIG. 14 is a block diagram conceptually illustrating an example of a wave-based anisotropy tensor tomography framework according to an example embodiment; and
FIG. 15 is a conceptual diagram illustrating an example of a generalized structure of an anisotropic second-order tensor and a connection relationship to residual stress reconstruction according to an example embodiment.

### DETAILED DESCRIPTION

Hereinafter, example embodiments will be described with reference to the accompanying drawings.

The example embodiments relate to a method and system for reconstructing a residual stress tensor based on three-dimensional (3D) dielectric tensor measurement, and more particularly, to a method and system for quantitatively reconstructing a stress tensor within a material in a non-destructive manner by inversely computing 3D dielectric tensor information acquired through polarization-controlled optical measurement.

The example embodiments do not reside in a specific optical measurement method itself, but rather in a 3D physics-based inverse problem framework that decomposes the total strain tensor distributed within a material into elastic strain and eigenstrain. The optical anisotropy tensor or the dielectric tensor corresponds to a single implementation example for deriving the total strain tensor, and the example embodiments provide a general analysis system that may reconstruct the residual stress through the same inversion structure as long as the total strain tensor is physically provided.

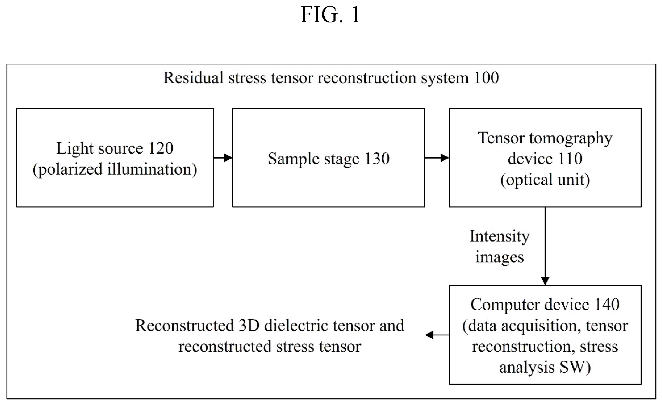

FIG. 1 is a diagram illustrating an example of the general configuration of a residual stress tensor reconstruction system according to an example embodiment.

Referring to FIG. 1, a residual stress tensor reconstruction system 100 according to the example embodiment may include a light source 120 configured to provide a polarized illumination to a sample, a sample stage 130 configured to support the sample and to control a location thereof, a tensor tomography device 110 configured to collect the light transmitted or scattered from the sample, and to acquire intensity images under a plurality of polarization conditions, and a computer device 140 configured to reconstruct a 3D dielectric tensor of the sample based on the intensity images, and to reconstruct and analyze a stress tensor within the sample from the reconstructed dielectric tensor.

The light generated from the light source 120 may be incident to the tensor tomography device 110 after passing through the sample placed on the sample stage 130, and may generate the intensity images by capturing the sample under a plurality of polarization states and illumination conditions. The generated intensity images may be transmitted to the computer device 140 through a data link.

The computer device 140 may reconstruct the 3D dielectric tensor by executing software that performs normalization, inverse problem calculation, and tensor analysis for the intensity images, and may compute the 3D stress tensor within the sample through a photoelasticity relationship and an inverse operation based on the reconstructed dielectric tensor. Depending on example embodiments, the computer device 140 may generate at least one of the magnitude, orientation, and stress distribution of principal stress, and the visualization results thereof.

Depending on example embodiments, the computer device 140 may be configured as a server physically separated from the tensor tomography device 110, a cloud computing infrastructure, or an external computing node, and may transmit and receive data to and from the tensor tomography device 110 through a wired or wireless network.

Here, the wired or wireless network may include the Internet, a local network (local area network (LAN)), a wireless local network (wireless local area network (WLAN)), a mobile communication network (cellular network), a dedicated communication network (private network), or the combination thereof.

Also, the computer device 140 may include two or more computing nodes or parallel computational devices and may interact with them, and may perform a 3D dielectric tensor reconstruction operation and a stress tensor reconstruction operation based on the same by performing distributed processing or parallel processing through the wired or wireless network.

The reconstructed stress tensor and the analysis result may be included in the residual stress tensor reconstruction system 100, or may be provided through an associated display device or storage device and displayed or stored.

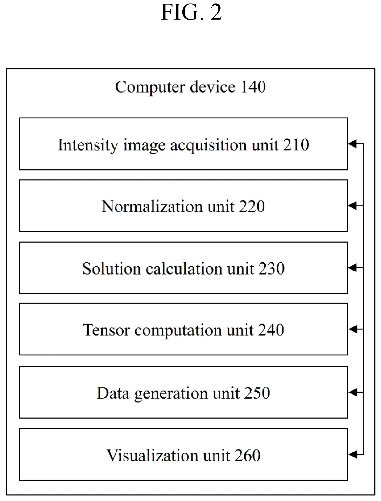

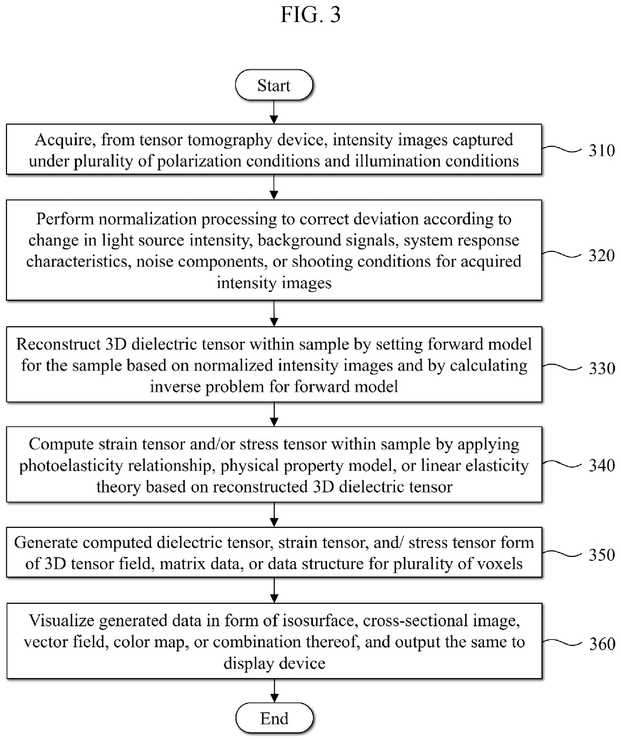

FIG. 2 is a block diagram illustrating an example of a logical internal configuration of a computer device according to an example embodiment, and FIG. 3 is a flowchart illustrating an example of a residual stress tensor reconstruction method according to an example embodiment.

The computer device 140 according to an example embodiment may include an intensity image acquisition unit 210, a normalization unit 220, a solution calculation unit 230, a tensor computation unit 240, a data generation unit 250, and a visualization unit 260. Here, the intensity image acquisition unit 210, the normalization unit 220, the solution calculation unit 230, the tensor computation unit 240, the data generation unit 250, and the visualization unit 260 may be functional expressions that functionally distinguish and express the operation of at least one processor included in the computer device 140.

The residual stress tensor reconstruction method according to the example embodiment may be performed by this computer device 140, and the computer device 140 may be controlled to perform operations 310 to 360 illustrated in FIG. 3 by executing a control instruction according to at least one computer program code or an operating system code stored in a memory.

In operation 310, the computer device 140 may acquire, from a tensor tomography device, intensity images captured under a plurality of polarization conditions and illumination conditions. To this end, the computer device 140 may receive the intensity images generated by the tensor tomography device 110 through the intensity image acquisition unit 210, and may store or buffer the same. Here, the plurality of polarization conditions may include at least one of different incident polarization states, detection polarization states, polarization rotation angles, illumination orientations, and illumination intensity conditions. This change in conditions may be intended to reflect optical anisotropy and birefringence characteristics within a sample to the intensity images. The acquired intensity images may be managed together with metadata related to shooting conditions, and used for processing in subsequent operations.

In operation 320, the computer device 140 may perform normalization processing to correct the deviation according to the change in light source intensity, background signals, system response characteristics, noise components, or shooting conditions for the acquired intensity images. To this end, the computer device 140 may perform various preprocessing and correction functions through the normalization unit 220, and a normalization process may include correction based on an optical transfer function, correction of nonuniformity of an optical system, noise suppression filtering, and correction for signal saturation or weak signal area. The normalized intensity images may be used as input data for setting a forward model and calculating an inverse problem in a subsequent operation.

In operation 330, the computer device 140 may reconstruct a 3D dielectric tensor within the sample by setting the forward model for the sample based on the normalized intensity images and by calculating the inverse problem for the forward model. To this end, the computer device 140 may set the forward model that reflects an illumination condition and a polarization condition used for shooting through the solution calculation unit 230, and may construct the inverse problem to minimize the difference between an intensity image predicted by the corresponding forward model and the actual normalized intensity image. The inverse problem may be set as a nonlinear optimization problem, and an iterative optimization technique, a variation-based algorithm, or a machine learning-based solver may be used. In this process, at least some or all of diagonal components or off-diagonal components of the dielectric tensor may be reconstructed.

In operation 340, the computer device 140 may compute a strain tensor and/or stress tensor within the sample by applying a photoelasticity relationship, a physical property model, or linear elasticity theory based on the reconstructed 3D dielectric tensor. To this end, the computer device 140 may perform eigenvalue and eigenvector analysis of the dielectric tensor, principal axis orientation calculation, material property parameter application, and the like through the tensor computation unit 240, and the strain tensor and the stress tensor may be computed in the tensor field form having the distribution within 3D space. These tensors may be used to quantitatively represent the residual distribution caused by residual stress within the sample or the external force.

In operation 350, the computer device 140 may generate the computed dielectric tensor, strain tensor, and/ stress tensor in the form of a 3D tensor field, matrix data, or a data structure for a plurality of voxels. To this end, the computer device 140 may convert tensor data to a data format suitable for visualization or subsequent analysis through the data generation unit 250, and processing such as combining multiple frame data, weighted averaging processing, generating multiple resolution data may be performed.

In operation 360, the computer device 140 may visualize the generated data in the form of isosurface, a cross-sectional image, a vector field, a color map, or combination thereof, and may output the same to a display device. To this end, the computer device 140 may visualize a stress tensor or a strain tensor in the form of a 3D heat map, a principal stress orientation vector field, or a specific cross-sectional image through the visualization unit 260, and the visualization result may be provided through the display device included in the computer device 140, or an external display device.

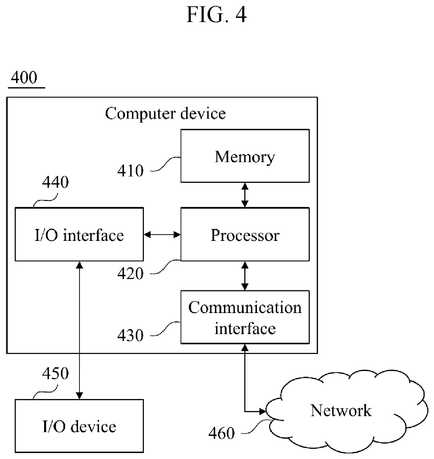

FIG. 4 is a block diagram illustrating an example of a computer device according to an example embodiment. For example, the computer device 400 of FIG. 4 may correspond to the computer device 140 included in the residual stress tensor reconstruction system 100 described above. Referring to FIG. 4, the computer device 400 may include a memory 410, a processor 420, a communication interface 430, and an I/O interface 440.

The memory 410 refers to computer-readable recording media, and may include a permanent mass storage device, such as a random access memory (RAM) that is a volatile memory, a read only memory (ROM) that is a nonvolatile memory, and a disk drive. Here, the permanent mass storage device, such as ROM or disk drive, may be included in the computer device 400 as a separate permanent storage device distinguished from the memory 410. The memory 410 may store an operating system (OS), a device driver, and at least one program code to perform intensity image processing, dielectric tensor reconstruction, and strain tensor or stress tensor computation.

Such software components may be loaded to the memory 410 from computer-readable recording media separate from the memory 410, and the recording media may include various types of computer-readable recording media, such as a floppy disk, a hard disk, an optical disc (DVD/CD-ROM), and a memory card. In another example embodiment, the software components may be received from a network 460 through the communication interface 430, and may be loaded to the memory 410. For example, the software components may be stored in the memory 410 in the form of a computer program that is installed in the computer device 400 by a program file or an update file provided through the network 460.

The processor 420 may perform operations related to intensity image acquisition, normalization processing, forward model setting, inverse problem calculation, dielectric tensor reconstruction, strain tensor and/or stress tensor computation, data generation, and visualization by executing a control instruction according to the program code stored in the memory 410. The processor 420 may be a single processor, and may be configured in the form of a plurality of processors, a multi-core processor, or a processor group capable of performing a parallel operation.

The communication interface 430 may provide a function that allows the computer device 400 to transmit and receive data with other devices over the network 460. For example, the communication interface 430 may be used to receive intensity image data from a tensor tomography device, or to transmit the reconstructed dielectric tensor or stress tensor data to an external server, a cloud computing infrastructure, or other computing devices. The network 460 may include at least one of the Internet, a local network (local area network (LAN)), a wireless network (Wi-Fi), a mobile communication network, and a dedicated communication network.

The input/output (I/O) interface 440 may provide an interface for interaction between the computer device 400 and at least one I/O device 450. An input device may include a keyboard, a mouse, a touch input device, a microphone, and an output device may include a display, a speaker, and a printer. In another example embodiment, the I/O interface 440 may provide an interface with a device in which input and output functions are integrated, such as a touchscreen. The I/O device 450 may be configured in an integral form with the computer device 400, or may be connected as an external device.

Also, in other example embodiments, the computer device 400 may be implemented to include components less than or greater than the components shown in FIG. 4. For example, the computer device 400 may further include a transceiver, a database, an accelerator unit (GPU), or a dedicated operation module. This modification may be variously made without departing from the technical spirit of the present invention.

Hereinafter, the theoretical basis and configuration principle on which the residual stress tensor reconstruction method and system according to example embodiments are implemented are described, and specific example embodiments including various experimental and simulation results performed based on the principle are described in detail. The example embodiments described below are only examples to help understanding of the present invention, and should not be construed as limiting the technical spirit and scope of the present invention.

The core principle of example embodiments relates to quantitatively reconstructing a 3D residual stress tensor present within a material in a non-destructive manner by applying a 3D dielectric tensor measured through dielectric tensor tomography (DTT) to photoelasticity theory and linear elasticity theory in a stepwise manner. The example embodiments may include processes of (1) 3D dielectric tensor measurement, (2) photoelasticity theory-based strain tensor reconstruction, and (3) linear elasticity theory-based residual stress tensor computation.

### (1) 3D dielectric tensor measurement

An example embodiment may three-dimensionally measure the 3×3 dielectric tensor distribution within a material using DTT technology. The dielectric tensor rerefers to the physical quantity indicating interaction characteristics with the light within the material, and directly reflects birefringence and optical anisotropy. Therefore, the dielectric tensor may be used to quantitatively capturing induced anisotropy that occurs within the material due to the external force or residual stress.

In an example embodiment, the dielectric tensor measured through the DTT technology may be expressed in the form of a symmetric 3×3 matrix, and the corresponding dielectric tensor may be diagonalized in a principal axis coordinate system. For example, the dielectric tensor may be expressed as shown in Equation 1 below. [Equation 1] $ε = R \left(\begin{matrix}{n}_{1}^{2} & 0 & 0 \\ 0 & {n}_{2}^{2} & 0 \\ 0 & 0 & {n}_{3}^{2}\end{matrix}\right) {R}^{T}$

Here, *ε* denotes the dielectric tensor, and R denotes a rotation matrix representing the principal axis orientation of the dielectric tensor. Also, *n*₁,*n*₂,*n*₃ are values corresponding to principal refractive indices of the dielectric tensor, and may represent refractive index information according to each principal axis orientation.

Principal axis orientation information and principal refractive index values of the tensor at each location within the material may be simultaneously acquired by diagonalizing the dielectric tensor in the above manner, which may be utilized as basic data to reconstruct a strain tensor and a stress tensor in a subsequent operation.

### (2) Photoelasticity-based strain tensor reconstruction

According to photoelasticity theory, deformation induced within the material by the external force appears as the change in the dielectric tensor, and the change in the dielectric tensor may be physically connected to the strain tensor. In particular, the principal axis orientation of birefringence may match the principal orientation of the strain tensor, and, here, the principal refractive index difference may have a relationship proportional to the magnitude of strain. Therefore, an example embodiment may spatially reconstruct the total strain tensor from the measured 3D dielectric tensor.

In an example embodiment, the relationship between the principal refractive index of the dielectric tensor and the principal component of the strain tensor may be expressed as shown in Equation 2 below. [Equation 2] $\left(\begin{matrix}1 / {n}_{1}^{2} \\ 1 / {n}_{2}^{2} \\ 1 / {n}_{3}^{2}\end{matrix}\right) - \frac{1}{{n}_{0}^{2}} = \left(\begin{matrix}{p}_{1} & {p}_{2} & {p}_{2} \\ {p}_{2} & {p}_{1} & {p}_{2} \\ {p}_{2} & {p}_{2} & {p}_{1}\end{matrix}\right) \left(\begin{matrix}{E}_{1} \\ {E}_{2} \\ {E}_{3}\end{matrix}\right)$

Here, *n*₁,*n*₂,*n*₃ denote values corresponding to principal refractive indices of the dielectric tensor, and *n*₀ denotes a refractive index in a reference state. Also, *E*₁,*E*₂,*E*₃ denote principal components of the strain tensor, and *p*₁ and *p*₂ denote specific photoelastic proportional constants of the material.

Based on Equation 2 above, the principal components *E*₁,*E*₂,*E*₃ of the strain tensor may be computed by using the measured principal refractive index information and predefined or corrected photoelastic proportional constants.

Also, the total strain tensor may be expressed as shown in Equation 3 below, using principal components and principal axis orientation information of the strain tensor. [Equation 3] $E = R \left(\begin{matrix}{E}_{1} & 0 & 0 \\ 0 & {E}_{2} & 0 \\ 0 & 0 & {E}_{3}\end{matrix}\right) {R}^{T}$

Here, E denotes the total strain tensor, and R denotes a rotation matrix identical to the rotation matrix representing the principal axis orientation of the dielectric tensor described above. In this way, by commonly applying the principal axis orientation information acquired from the dielectric tensor to the strain tensor reconstruction, the 3D total strain tensor at each location within the material may be consistently reconstructed.

The reconstructed total strain tensor may be utilized as input data to compute a residual stress tensor in a subsequent operation.

### (3) Linear elasticity theory-based residual strain separation

Linear elasticity theory may provide a mathematical differential equation to describe residual stress caused by inherent deformation present within the material. An example embodiment may separate elastic strain caused by residual stress and eigenstrain caused by permanent deformation by interpreting the total strain tensor measured within the material based on the linear elasticity theory.

In general, the total strain may be expressed as the sum of elastic strain caused by the residual stress and the eigenstrain caused by a manufacturing process or plastic deformation, and may be expressed as shown in Equation 4 below. [Equation 4] $E = e + e *$

Here, E denotes a total strain tensor, e denotes an elastic strain tensor, and e* denotes an eigenstrain tensor.

Stress and strain in the elastic range may have a linear relationship, and the relationship between the stress tensor and the elastic strain tensor may be expressed as Equation 5 below. [Equation 5] ${σ}_{ij} = {C}_{ijkl} {e}_{kl}$

Here, *Cᵢⱼₖₗ* denotes a tensor that represents elastic moduli, and *σᵢⱼ* denotes a component of the residual stress tensor.

Also, the total strain tensor may be expressed by displacement field u as shown in Equation 6 below. [Equation 6] ${E}_{ij} = \frac{1}{2} \left({u}_{i , j}+{u}_{j , i}\right)$

Here, u denotes a displacement vector, and *u_{i,j}* denotes a spatial differential component of the displacement vector.

A governing equation according to the linear elasticity theory and its forward solution may be expressed as follows. [Equation 7] $\left(λ+μ\right) ∇ \left(∇⋅u\right) + μ {∇}^{2} u + F = 0$

Also, using the solution for the governing equation, the residual stress tensor may be expressed in the integral form as shown in Equation 8 below. [Equation 8] ${σ}_{ij} \left(x\right) = {C}_{ijkl} \int \left[{C}_{pqmn}\left({G}_{kp , qn}{e}_{ml}^{*}-{G}_{kp , ql} {e}_{mn}^{*}\right)\right] d x ′$

Here, G denotes Green's function corresponding to the linear elastic governing equation, and x' denotes spatial coordinates corresponding to an integration variable.

The analytical solution in the Fourier domain may be expressed as Equation 9 below using Green's function M. [Equation 9] ${\hat{σ}}_{ij} \left(k\right) = {M}_{ijkl} \left(k\right) {\hat{e}}_{kl}^{*} \left(k\right)$

Here, k denotes a spatial frequency vector, and (▪̂) denotes Fourier transformed physical quantity.

By inversely operating the above relational equation, the residual stress tensor may be derived based on the total strain tensor, as shown in Equation 10 and Equation 11 below. [Equation 10] $\left({I}_{ijnm}+{M}_{ijkl}\left(k\right){C}_{klnm}^{- 1}\right) {\hat{σ}}_{nm} \left(k\right) = {M}_{ijkl} \left(k\right) {\hat{E}}_{kl} \left(k\right)$ [Equation 11] ${\hat{σ}}_{nm} \left(k\right) = \left({I}_{nmij}+{C}_{nmkl} {M}_{klij}^{- 1}\left(k\right)\right) {M}_{ijkl} \left(k\right) {\hat{E}}_{kl} \left(k\right)$

Transformation to the Fourier transform is to mitigate boundary condition dependence in the spatial domain and to enable an analytical or semi-analytical solution using Green's function, which may improve the numerical stability of residual stress reconstruction in the example embodiments.

As described above, an example embodiment may calculate the residual stress tensor σ from the measured total strain tensor E and, through this, may three-dimensionally reconstruct the residual stress distribution over the global internal region within the material.

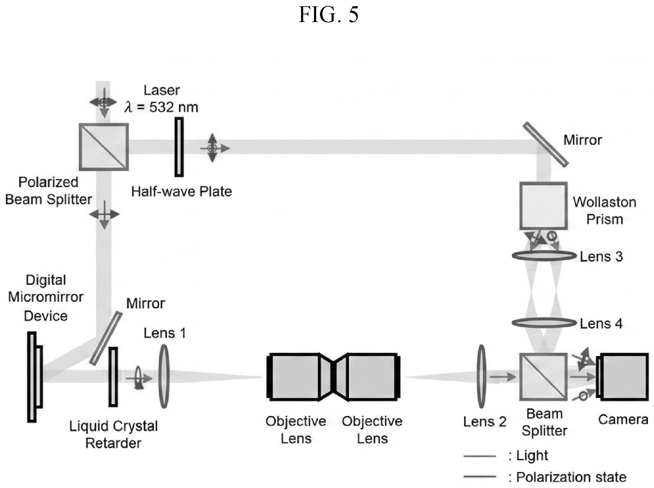

FIG. 5 illustrates an example of an optical configuration of a dielectric tensor tomography (DTT) system according to an example embodiment. Referring to FIG. 5, the DTT system may include a laser light source, a polarized beam splitter, a half-wave plate, a liquid crystal retarder, a digital micromirror device, a plurality of lenses and mirrors, a polarization splitting element (Wollaston prism), a beam splitter, and a camera.

In an example embodiment, the laser light source may generate polarized light of a predetermined wavelength, and the polarization state of the light may be controlled through the polarized beam splitter and the half-wave plate. Also, the liquid crystal retarder and the digital micromirror device may be used to variably control the polarization state and spatial distribution of the illumination light.

The illumination light controlled in this manner may be modulated according to the optical property within a sample after being incident to the sample, and the modulated light may be transmitted to a detection path through an objective lens and a plurality of optical elements. In the detection path, different polarization components may be separated through the Wollaston prism and the beam splitter, and each of the separated polarization components may be captured by the camera.

Through the above optical configuration, the sample may be captured under a plurality of polarization conditions and illumination conditions, and through this, multiple measurement data required for dielectric tensor tomography may be acquired.

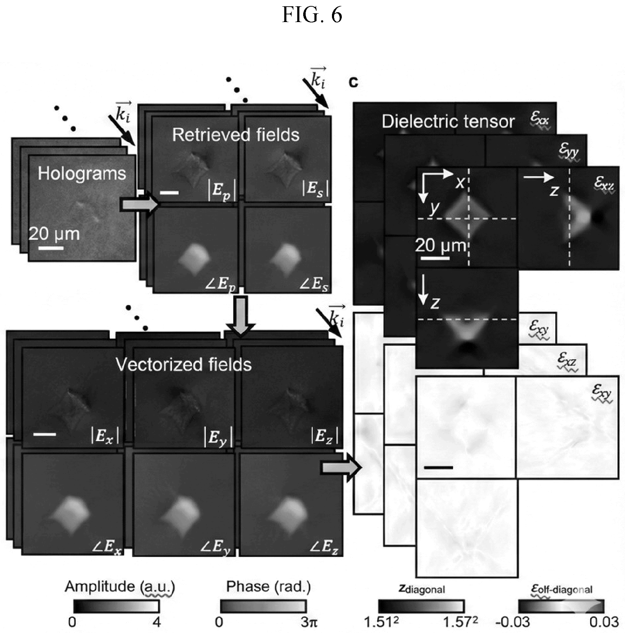

FIG. 6 illustrates a conceptual example of a dielectric tensor measurement and reconstruction process using dielectric tensor tomography (DTT) according to an example embodiment. Referring to FIG. 6, an electric field component may be reconstructed from multiple hologram data acquired under different incident wave vector conditions.

In an example embodiment, the hologram data may include a plurality of retrieved fields corresponding to polarization-separated electric field components, and each retrieved field may include amplitude and phase information of the corresponding electric field. Based on the retrieved fields, electric field vector components (|Eₓ|, |E_{y}|, |E_{z}|) may be spatially vectorized.

Using the vectorized electric field components, dielectric tensor components at each location within the sample may be calculated and accordingly, diagonal components and off-diagonal components of the dielectric tensor may be three-dimensionally reconstructed. In FIG. 6, distributions of the diagonal components and the off-diagonal components of the dielectric tensor are illustrated in different color maps as an example.

In this way, the example embodiment may quantitatively acquire the 3D dielectric tensor distribution within the sample through hologram-based electric field retrieval, electric field vectorization, and dielectric tensor component computation process, and the dielectric tensor distribution may be utilized as basic data to reconstruct a strain tensor and a residual stress tensor later.

FIG. 6 specifically illustrates a process of actually implementing and operating the 3D dielectric tensor measurement method described above. That is, as described above in relation to 3D dielectric tensor measurement, a process of reconstructing electric field components from holograms acquired under a plurality of polarization states and incidence conditions for the light that passes through the sample, and computing dielectric tensor components at each location within the sample using the reconstructed electric field vector are illustrated in FIG. 6.

In particular, as illustrated in FIG. 6, the vectorized electric fields may be constructed from the reconstructed electric field components, and based on them, the 3D dielectric tensor distribution including the diagonal components and the off-diagonal components of the dielectric tensor may be spatially acquired. The dielectric tensor distribution quantitatively reflects optical anisotropy and birefringence characteristics within a material, and may be utilized as input data to reconstruct the strain tensor and the stress tensor in a subsequent operation.

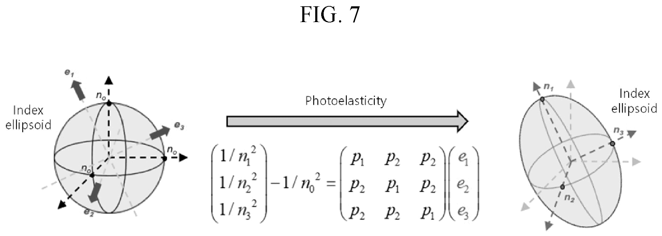

FIG. 7 conceptually illustrates a physical corresponding relationship between a dielectric tensor or an index ellipsoid and a strain tensor due to the photoelasticity effect according to an example embodiment. The left side of FIG. 7 illustrates the index ellipsoid before the external force is applied or in a reference state. Here, the index ellipsoid may exhibit an isotropic or weakly anisotropic state with a reference refractive index *n*₀.

The right side of FIG. 7 illustrates the index ellipsoid changed in response to occurrence of strain within the material due to the external force or residual stress. In this case, the principal axis orientation and principal refractive indices *n*₁,*n*₂,*n*₃ of the index ellipsoid may change in response to the principal orientation and magnitude of the strain. That is, the strain distribution formed within the material may be reflected through the change in the shape and orientation of the index ellipsoid.

A mathematical relationship according to photoelasticity theory is illustrated at the center of FIG. 7. According to this, the change in refractive index may be expressed as a function of photoelasticity coefficients *p*₁,*p*₂ and strain components *e*₁,*e*₂,*e*₃. For example, the difference between the inverse square of the principal refractive index and the inverse square of the reference refractive index may be expressed as the product of a matrix including photoelasticity coefficients and a strain vector.

In this way, FIG. 7 conceptually describes that the change in optical anisotropy expressed as the dielectric tensor or the index ellipsoid is physically connected to the strain tensor according to photoelasticity theory. The present invention provides a theoretical basis for interpreting the dielectric tensor measurement result as a strain tensor.

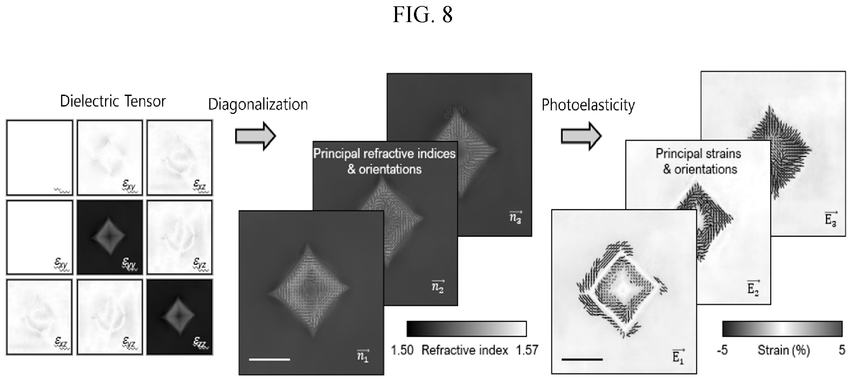

As described above, the photoelasticity-based physical correspondence relationship between the dielectric tensor or the index ellipsoid and the strain tensor is described through FIG. 7. Based on this theoretical relationship, the principal refractive index and its orientation information may be computed from the dielectric tensor measurement information, and may be used to quantitatively reconstruct the strain tensor within the material. FIG. 8 illustrates an example of processing flow of applying this theory to actual measurement data and the result thereof.

FIG. 8 illustrates an example of the entire data processing flow of computing a principal refractive index and principal axis orientation from a measured 3D dielectric tensor and applying the same to photoelasticity theory to reconstruct a strain tensor, and result thereof according to an example embodiment.

The left side of FIG. 8 illustrates each component distribution of the dielectric tensor measured within the material through DTT technology, which may be expressed in the form of a 3×3 dielectric tensor that includes diagonal components and off-diagonal components. This dielectric tensor may be acquired in the form of tensor fields distributed throughout the internal space of the material.

The center of FIG. 8 illustrates principal refractive indices and their principal axis orientation information computed by diagonalizing the dielectric tensor. Here, a principal refractive index value may represent the refractive index magnitude at each location, and the principal axis orientation may represent orientation information corresponding to an eigenvector of the dielectric tensor.

The right side of FIG. 8 illustrates distributions of principal strains and their orientations reconstructed by applying the principal refractive index information and the principal axis orientation information to the photoelasticity theory. Each principal strain value may represent the magnitude of deformation that occurs within the material, and corresponding orientation information may correspond to the principal orientation of the strain tensor. This strain distributions may be visualized as color maps, vector fields, or combination thereof.

In this way, FIG. 8 illustrates that the method according to the present invention may quantitatively compute the deformation state within the material through a series of processing processes including dielectric tensor measurement, tensor diagonalization, and photoelasticity-based strain reconstruction, through a specific data example.

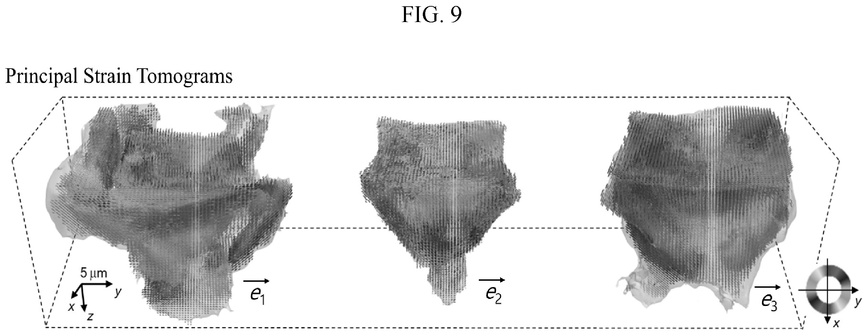

FIGS. 9 to 12 illustrate examples of distribution of 3D strain tensors reconstructed from dielectric tensors measured using dielectric tensor tomography (DTT) technology for glass specimens subjected to Vickers indentation according to an example embodiment. The results shown in FIGS. 9 to 12 exemplarily show that the method according to the present invention may quantitatively reconstruct the complex 3D deformation state induced by local mechanical load.

FIG. 9 illustrates an example of the 3D distribution of principal strain tomograms reconstructed within a glass specimen subjected to Vickers indentation. Each tomogram illustrated in FIG. 9 corresponds to a different principal strain component (e₁, e₂, e₃), and the magnitude and orientation of each principal strain may be visualized in the form of the vector field in the 3D space. Through this, it may be verified that the asymmetric and directional deformation structure formed within the specimen by Vickers indentation is three-dimensionally distributed including the depth direction.

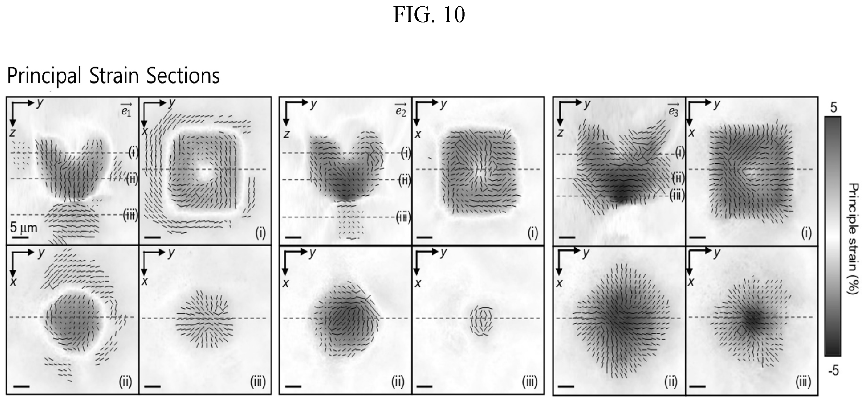

FIG. 10 illustrates an example of principal strain sections for selected cross-sections selected from the principal strain tomograms of FIG. 9. Each section of FIG. 10 represents the strain distribution at a different depth location, and a color map may represent the magnitude of principal strain, and vector indication may represent the orientation of the corresponding principal strain. Through the strain sections, how the strain induced by Vickers indentation load changes depending on a location within the specimen may be more precisely analyzed.

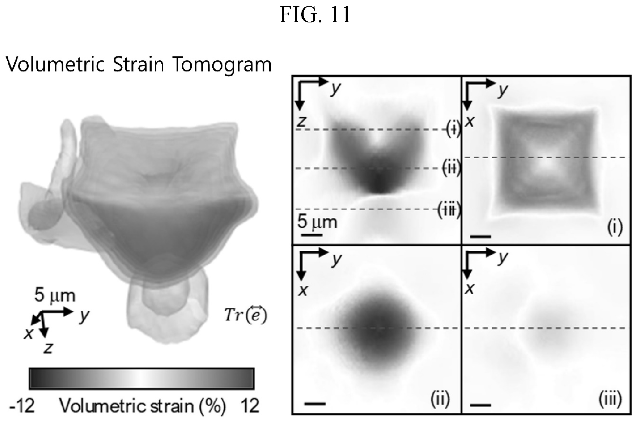

FIG. 11 illustrates an example of a volumetric strain tomogram reconstructed within a glass specimen subjected to Vickers indentation in an example embodiment. The volumetric strain of FIG. 11 may be a value that is computed based on the sum (trace) of diagonal components of the strain tensor, and may represent local volumetric expansion or contraction behavior. Through this, it may be verified that compression and tensile regions formed inside the specimen by indentation load are spatially separated and distributed.

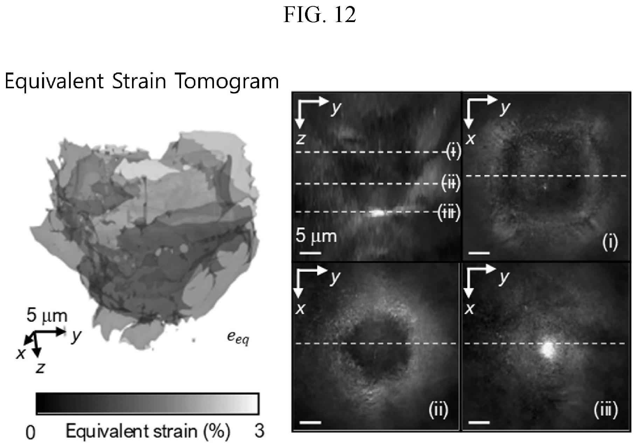

FIG. 12 illustrates an example of an equivalent strain tomogram reconstructed within a glass specimen subjected to Vickers indentation in an example embodiment. Equivalent strain may be a scalar value calculated from principal strain components, and may intuitively represent the distribution of strain intensity within the material. The result of FIG. 12 shows that deformation induced by Vickers indentation is concentrated in a specific region and how this deformation concentration region three-dimensionally expands.

The experimental results of FIGS. 9 to 12 empirically demonstrate that the complex 3D strain distribution caused by local mechanical load may be nondestructively and quantitatively analyzed through dielectric tensor measurement, photoelasticity-based strain reconstruction, and 3D visualization method according to the present invention.

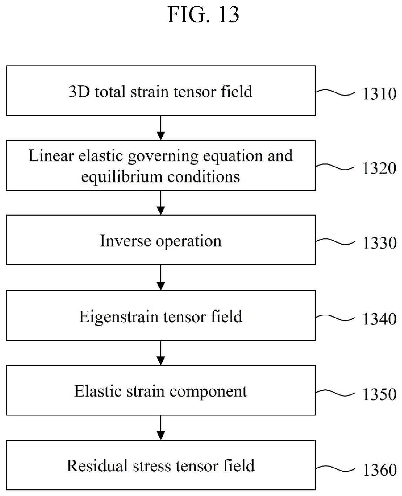

FIG. 13 is a block diagram illustrating an example of flow of a 3D inverse problem framework that separates eigenstrain from 3D total strain tensor field and uses the same to reconstruct a residual stress tensor according to an example embodiment. Referring to FIG. 13, a 3D total strain tensor field 1310 distributed within a material is provided as input. The total strain tensor field may be physical tensor data that is computed from the optical anisotropy tensor field according to photoelasticity theory or measured through other physical measurement methods.

Then, the total strain tensor field 1310 is applied to a linear elastic governing equation and equilibrium conditions 1320. The governing equation may include a stress-strain relationship according to continuum mechanics, an elastic modulus tensor of the material, boundary conditions, and external force removal conditions.

Then, an inverse operation 1330 based on the governing equation is performed, and an eigenstrain tensor field 1340 is estimated from the total strain tensor. The inverse operation may include Fourier domain analysis, Green's function-based solution, or other numerical inverse problem solutions.

After the eigenstrain tensor field 1340 is estimated, an elastic strain component 1350 is derived based on the relationship with the total strain tensor. That is, the total strain tensor is modeled sing the sum of elastic strain components and eigenstrain components, and as eigenstrain is separated, the elastic strain may be calculated.

By applying the elastic modulus tensor to the elastic strain component 1350, a residual stress tensor field 1360 is computed. The residual stress tensor field may represent a stress state that remains within the material after the external force is removed.

In this way, an inverse problem framework illustrated in FIG. 13 may provide the technical structure that is not limited to a simple mathematical model, as a physics-based reconstructions process that is performed to satisfy the linear elastic governing equation by using the physically measured or computed 3D total strain tensor as input.

According to another example embodiment, residual stress reconstruction does not necessarily need to start from the optical anisotropy tensor. Even when the total strain tensor field distributed within the material is provided by mechanical measurement, diffraction-based measurement, tomogram-based deformation estimation, or other physical measurement techniques, the residual stress may be reconstructed by modeling the total strain tensor using the sum of elastic strain components and eigenstrain components, and by separating eigenstrain through an inverse operation based on the linear elastic governing equation. Therefore, the present invention provides a general physics-based inverse problem analysis structure that is independent of a specific optical measurement method.

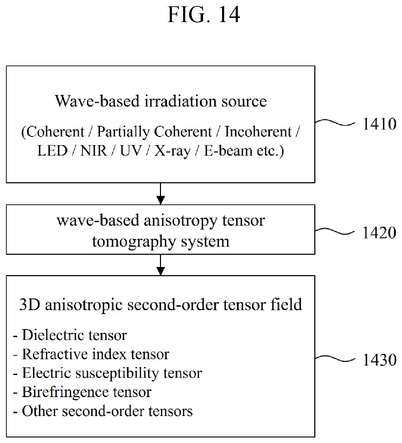

FIG. 14 is a block diagram conceptually illustrating an example of a wave-based anisotropy tensor tomography framework according to an example embodiment. Referring to FIG. 14, a wave-based irradiation source 1410 may be provided. The wave-based irradiation source 1410 may include a coherent light source, a partially coherent light source, an incoherent light source, a light emitting diode (LED)-based light source, and waves used for measurement are not limited to a specific wavelength band. For example, in additional to the visible light band, near-infrared (NIR), ultraviolet (UV), X-ray, electron beam (E-beam), and other electromagnetic waves or particle waves may be used.

Wave signals irradiated by the wave-based irradiation source 1410 may be collected and processed by a wave-based anisotropy tensor tomography system 1420. The tomography system may be configured to reconstruct the physical anisotropy within the sample in the 3D tensor form based on a plurality of signals acquired under different irradiation conditions, polarization conditions, incidence angles, or phase conditions.

As a result, a 3D anisotropic second-order tensor field 1430 is computed. The anisotropic second-order tensor field is not limited to the specific physical quantity and may include, for example, a dielectric tensor, a refractive index tensor, an electric susceptibility tensor, a birefringence tensor, or other second-order tensors.

As described above, the wave-based anisotropy tensor tomography framework illustrated in FIG. 14 may provide a general tensor tomography structure that is not limited to a specific optical frequency, a specific light source type, or specific physical quantity, and may serve as foundational technology for generating the 3D anisotropy tensor field that may be provided as input to a residual stress reconstruction framework (e.g., FIG. 13) according to the present invention.

The wave-based anisotropy tensor tomography is not limited to a specific optical frequency, and may be implemented using near-infrared (NIR), ultraviolet (UV), X-ray, electron beam (E-beam), or other electromagnetic wave and wave-based physical signals in additional to the visible light band. Also, the tomography may include a reconstruction technique based on interference, diffraction, phase reconstruction, or other wave propagation models, and may construct a general tensor tomography framework that is not limited to a specific light source type or specific physical quantity.

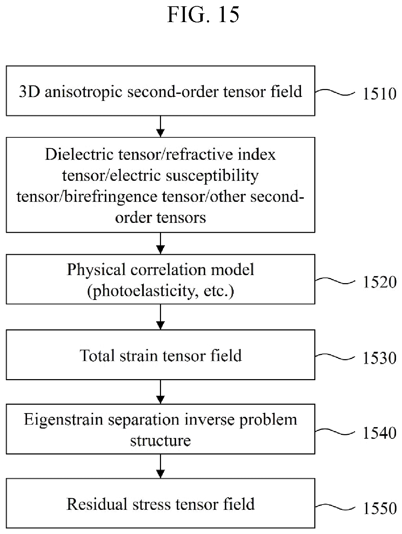

FIG. 15 is a conceptual diagram illustrating an example of a generalized structure of an anisotropic second-order tensor and a connection relationship to residual stress reconstruction according to an example embodiment. Referring to FIG. 15, a 3D anisotropic second-order tensor field 1510 is initially defined. The anisotropic second-order tensor field is not limited to the specific physical quantity, and may include, for example, a dielectric tensor, a refractive index tensor, an electric susceptibility tensor, a birefringence tensor, or other second-order tensors that represent physical anisotropy.

The anisotropic second-order tensor field 1510 is applied to a physical correlation model 1520. The physical correlation model may include a photoelasticity relationship and a tensor-strain conversion relationship based on an electromagnetic response model or other physical laws.

As a result, the total strain tensor field 1530 is computed. The total strain tensor may be modeled using the sum of elastic strain components and eigenstrain components.

Then, using an eigenstrain separation inverse problem structure 1540, eigenstrain is estimated from the total strain tensor and the elastic strain is derived.

Finally, the residual stress tensor field 1550 is reconstructed by applying the elastic modulus tensor to the elastic strain.

In this way, FIG. 15 conceptually illustrates a generalized framework that is not limited to a specific dielectric tensor or optical anisotropy, and may reconstruct the residual stress from various physical anisotropic second-order tensors.

FIGS. 13 to 15 illustrate the residual stress reconstruction structure of the present invention that expands in a stepwise manner from different perspectives.

FIG. 13 illustrates the physics-based 3D inverse problem framework that reconstructs the residual stress by separating eigenstrain from the 3D total strain tensor.

FIG. 14 illustrates the wave-based anisotropy tensor tomography framework that is not limited to a specific optical frequency or a specific measurement method as a preliminary operation for deriving the total strain tensor. That is, FIG. 14 conceptually illustrates that the 3D anisotropic second-order tensor may be reconstructed using various wave sources, such as a coherent light source, a partially coherent light source, a noncoherent light source, an LED, near-infrared light, UV, X-ray, and an E-beam.

FIG. 15 illustrates that the anisotropic second-order tensor computed in FIG. 14 may be generalized to a refractive index tensor, an electric susceptibility tensor, a birefringence tensor, or other second-order tensors that express physical anisotropy, without being limited to a specific dielectric tensor, and illustrates a series of structures in which this generalized tensor is transformed to the total strain tensor through a physical correlation model and then connected to the residual stress through the eigenstrain separation inverse problem structure.

Therefore, FIGS. 13 to 15 constitute an integrated technical framework that comprehensively includes operations, starting from a measurement operation of the wave-based anisotropy tensor to a strain computation operation according to the physical correlation model and an eigenstrain separation-based residual stress reconstruction operation.

According to another example embodiment, the residual stress reconstruction does not necessarily need to start from an optical anisotropy tensor.

That is, although the entire strain tensor field distributed within a material is provided by any physical method, the residual stress may be reconstructed by modeling the total strain tensor using the sum of elastic strain and eigenstrain and by separating the eigenstrain through an inverse operation based on a linear elastic governing equation.

Here, the total strain tensor may be computed according to photoelasticity theory, but may be provided by mechanical measurement, diffraction-based measurement, tomogram-based deformation estimation, or other physical measurement techniques.

Therefore, the present invention is independent of a specific optical measurement method, and provides a general physics-based framework that may reconstruct the residual stress by applying the same eigenstrain separation inverse problem structure as long as the total strain tensor is physically provided.

A residual stress reconstruction method of the present invention may be performed by a technical system that processes physically measured or provided 3D tensor data as input, rather than a simple mathematical calculation procedure.

In an example embodiment, a residual stress reconstruction system may include a memory configured to store a 3D anisotropy tensor or the total strain tensor, a physical model storage configured to store a linear elastic governing equation and a boundary condition, a processor configured to perform an inverse operation, a numerical value analysis module configured to perform a Fourier transform or Green's function operation, and an output unit configured to visualize the result or output the same to an external system.

The processor may be configured to estimate eigenstrain based on a stored physical property model and to calculate the residual stress by applying an elastic modulus tensor.

In this way, example embodiments provide a technical processing system that reconstructs the stress state within a material based on actual physical measurement data, and are not limited to an abstract mathematical algorithm.

The residual stress tensor reconstruction according to example embodiment may be understood as a process of solving an inverse problem that reversely interprets a governing equation according to linear elasticity theory, starting from a dielectric tensor directly acquirable through optical measurement and the total strain tensor computed based on the dielectric tensor.

In particular, the residual stress remaining within the material even after the external force is removed may be expressed as a component caused by the eigenstrain, and the present invention may quantitatively reconstruct the residual stress tensor without unmeasurable displacement field or external force history information by separating the total strain tensor into the elastic strain and the eigenstrain.

The residual stress tensor reconstruction operation used in example embodiments may include a method of transforming the governing equation according to linear elasticity theory to the Fourier domain and then analytically or numerically acquiring a solution using Green's function.

This approach may mitigate sensitivity to boundary conditions or local discontinuity in the spatial domain, and enables stable residual stress tensor reconstruction even for complex 3D stress distribution. Also, the corresponding inverse operation may be configured to be generally applicable to various material constants and experimental conditions.

The example embodiments differ from the existing technology in that the example embodiment may reconstruct the residual stress tensor not only in a sample under the influence of the external force but also in a sample after the external force is removed. This is because the residual stress is stored within a material as continuity breakdown of the displacement field or as eigenstrain and this eigenstrain is reflected as the change in the dielectric tensor through the photoelasticity effect.

Therefore, the method according to example embodiments may quantitatively evaluate the residual stress state using only dielectric tensor information at a time of measurement, without a need to know external force application history or boundary condition information in advance.

In example embodiments, the reconstructed residual stress tensor may be a symmetric 3×3 tensor, and may include a total of six independent components. The residual stress tensor simultaneously includes information on the magnitude and orientation of stress at each spatial location, and if necessary, may be expressed in the form of the magnitude of the principal stress and principal orientation vector corresponding thereto through eigenvalue decomposition. Through this, the stress state within the material may be analyzed in a more intuitive and physically interpretable form.

In example embodiments, the residual stress tensor may be reconstructed in the spatially continuous 3D tensor field form for a plurality of voxels within a sample. Each voxel may be defined in a smallest spatial unit to which dielectric tensor measurement, strain tensor reconstruction, and residual stress inversion are independently applied. The 3D stress distribution over the entire internal region within a material may be continuously acquired through this voxel-level tensor reconstruction.

In example embodiments, reconstruction of the residual stress tensor is not limited to simple analytical inversion, and may be performed using an inverse problem solving method that includes a normalization technique, a constraint setting technique, or a numerical optimization technique, to secure numerical stability and robustness against noise. This approach enables stable residual stress tensor reconstruction although a measurement error, incomplete data, or experimental noise is present.

According to example embodiments, operation from a dielectric tensor measurement stage to a residual stress tensor reconstruction stage may be performed in real time or in near real time. Through this, the stress state changing over time may be continuously tracked. For example, it may be utilized to dynamically observe a stress change process that occurs during heat treatment, mechanical load application, or machining process.

The reconstructed residual stress tensor may be visualized in the isosurface, section, or vector field form. This visualization result may be used to intuitively identify the spatial characteristic of the stress distribution within the material. Visualization may be provided through a display of a computer device or an external display device.

In example embodiments, dielectric tensor measurement, strain tensor reconstruction, residual stress tensor inversion, and visualization operations may be automatically performed through a single integrated computational pipeline. Through this, highly reproducible residual stress analysis is enabled while minimizing user intervention.

The example embodiments may quantitatively reconstruct the residual stress tensor within a material in a non-destructive manner by solving an inverse problem that reversely interprets a governing equation according to linear elasticity theory, starting from a dielectric tensor directly acquirable through optical measurement and the total strain tensor computed based on the dielectric tensor. Therefore, the limitations of the existing methods that require direct measurement of the displacement field, external force application conditions, or boundary conditions may be effectively solved.

The example embodiments may quantitatively reconstruct the residual stress remaining within a material even after the external force is removed by introducing the concept of separating the total strain tensor into elastic strain and eigenstrain. Through this, even when external force history information is absent or measurement is impossible, the spatial distribution and magnitude of the residual stress may be stably computed.

The residual stress tensor reconstruction computation used in example embodiments may mitigate sensitivity to boundary conditions or local discontinuity in the spatial domain by including a method of transforming the governing equation according to linear elasticity theory to the Fourier domain and then analytically or numerically acquiring a solution using the Green's function. Therefore, stable and highly reproducible residual stress tensor reconstruction is possible even for a material having the complex 3D stress distribution.

The example embodiments may be configured such that a residual stress tensor reconstruction process is not limited to specific material constants, shape, or experimental conditions, so may be generally applicable to various material properties and measurement environments. Therefore, general residual stress evaluation technology may be provided for various materials with optical anisotropy, such as glass, ceramics, and polymer materials.

The example embodiments may reconstruct the residual stress tensor not only in a sample under the influence of the external force but also in a sample after the external force is removed, so may be utilized in various industrial and academic application fields, including residual stress evaluation after a manufacturing process, long-term reliability analysis, and stress accumulation behavior analysis within a microstructure.

The systems or the apparatuses described herein may be implemented using hardware components, and/or combination of hardware components and software components. For example, the apparatuses and the components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied in any type of machine, component, physical equipment, virtual equipment, computer storage medium or device, to be interpreted by the processing device or to provide an instruction or data to the processing device. The software also may be distributed over network coupled computer systems so that the software is stored and executed in a distributed fashion. The software and data may be stored by one or more computer readable storage media.

The methods according to example embodiments may be configured in a form of program instructions performed through various computer methods and recorded in non-transitory computer-readable media. The media may include, alone or in combination with program instructions, data files and data structures. Here, the media may continuously store computer-executable programs or may transitorily store the same for execution or download. Also, the media may be various types of recording devices or storage devices in a form in which one or a plurality of hardware components are combined. Without being limited to media directly connected to a computer system, the media may be distributed over the network. Examples of the media include ROM, PROM, EPROM, EEPROM, flash memory (e.g., NAND/NOR), SSD, HDD, magnetic tape, optical recording media (CD-ROM, DVD, BD), magneto-optical media, memory card, and USB memory. This storage media refers to non-transitory media, and does not include a transmission signal itself or a pure volatile memory (e.g., RAM). Also, examples of other media may include recording media to storage media managed by an Appstore that distributes applications or a site, a server, and the like, that supply and distribute other variety of software. Examples of the program instructions include machine language codes as produced by a compiler and advanced language codes executable by a computer using an interpreter.

Although the example embodiments are described with reference to some specific example embodiments and accompanying drawings, it will be apparent to one of ordinary skill in the art that various alterations and modifications in form and details may be made in these example embodiments without departing from the spirit and scope of the claims and their equivalents. For example, suitable results may be achieved if the described techniques are performed in different order, and/or if components in a described system, architecture, device, or circuit are combined in a different manner, and/or replaced or supplemented by other components or their equivalents.

Therefore, other implementations, other example embodiments, and equivalents of the claims are to be construed as being included in the claims.

## Claims

1. A method of reconstructing a residual stress tensor within a material from an optical anisotropy tensor field distributed in a three-dimensional (3D) space, the method comprising:
(a) computing a principal axis orientation and a principal component by performing eigenvalue decomposition at each spatial location for the optical anisotropy tensor field;
(b) computing the total strain tensor at each spatial location by applying the principal component to an optical anisotropy-strain relationship according to photoelasticity theory; and
(c) separating the total strain tensor into an elastic strain component and an eigenstrain component through an inverse operation based on a governing equation according to linear elasticity theory, and calculating the residual stress tensor from the elastic strain component.

2. The method of claim 1, wherein the optical anisotropy tensor field includes a dielectric tensor acquired through tomography using light with a controlled polarization state.

3. The method of claim 2, wherein the dielectric tensor is a 3×3 tensor defined in the 3D space.

4. The method of claim 2, wherein the light with the controlled polarization state includes a plurality of polarization conditions including different polarization orientations, polarization rotation angles, or polarization combinations.

5. The method of claim 1, wherein the optical anisotropy tensor field is acquired by dielectric tensor tomography technology that reconstructs the dielectric tensor within a sample into a single layer based on a plurality of optical signals acquired from the sample under different polarization conditions and illumination conditions.

6. The method of claim 1, wherein the optical anisotropy tensor field is expressed as a symmetric second-order tensor at each spatial location, and defined in the form in which eigenvalue decomposition is possible.

7. The method of claim 1, wherein the computing of the total strain tensor comprises computing the total strain tensor by applying a difference between an eigenvalue of an optical anisotropy tensor defined at each spatial location of the optical anisotropy tensor field and an eigenvalue in a reference state to an optical anisotropy-strain mathematical relationship including a photoelasticity coefficient.

8. The method of claim 1, wherein the total strain tensor is expressed as the sum of the elastic strain component and the eigenstrain component.

9. The method of claim 1, wherein the inverse operation is performed in a manner of estimating the eigenstrain component to satisfy an equilibrium condition assuming a state in which the external force is removed.

10. The method of claim 1, wherein the inverse operation is performed by transforming the governing equation according to the linear elasticity theory to the Fourier domain.

11. The method of claim 1, wherein the inverse operation is performed using Green's function defined in the Fourier domain.

12. The method of claim 1, wherein the residual stress tensor represents a stress state remaining within the material even after the external force is removed.

13. The method of claim 1, wherein the optical anisotropy tensor field includes a dielectric tensor at each spatial location.

14. The method of claim 1, wherein the optical anisotropy tensor field includes a refractive index tensor or an optical index ellipsoid tensor at each spatial location.

15. A residual stress tensor reconstruction system for reconstructing a residual stress tensor within a material from an optical anisotropy tensor field distributed in a three-dimensional (3D) space, wherein the residual stress tensor reconstruction system comprises at least one computer device, and, by at least one the processor included in the at least one computer device, is configured to,
(a) compute a principal axis orientation and a principal component by performing eigenvalue decomposition at each spatial location for the optical anisotropy tensor field;
(b) compute the total strain tensor at each spatial location by applying the principal component to an optical anisotropy-strain relationship according to photoelasticity theory; and
(c) separate the total strain tensor into an elastic strain component and an eigenstrain component through an inverse operation based on a governing equation according to linear elasticity theory, and calculate the residual stress tensor from the elastic strain component.
